# EUROPÄISCHE PATENTSCHRIFT

(11) **EP 0 916 534 B1**
(45) Veröffentlichungstag und Bekanntmachung des Hinweises auf die Patenterteilung: **15.02.2006**
(21) Anmeldenummer: 98120582.6
(22) Anmeldetag: 30.10.1998
(51) Int. Cl.: B60J 5/04

(54) **Rohbautür eines Fahrzeugs**
Construction of a vehicle door
Construction d'une porte de véhicule

(30) Priorität: 13.11.1997 DE 19750343; 01.07.1998 DE 19829457
(43) Veröffentlichungstag der Anmeldung: 19.05.1999
(60) Teilanmeldung: 02010453.5
(73) Patentinhaber: Schade GmbH & Co. KG, 58840 Plettenberg (DE)
(72) Erfinder: Schulte, Martin, 58802 Balve (DE); Levermann, Ulrich, 58809 Neuenrade-Blintrop (DE)
(74) Vertreter: Gossel, Hans K.

(56) Entgegenhaltungen:
- DE-A- 3 221 322
- DE-A- 4 017 050
- DE-A- 4 027 449
- DE-A- 4 331 616
- FR-A- 2 702 424

## Beschreibung

Die Erfindung betrifft eine Rohbautür eines Kraftfahrzeugs, dessen Türkasten mit einem aus einem Profil bestehenden Fensterrahmen verbunden ist.

Rohbautüren für Kraftfahrzeuge werden ihrer grundsätztichen Bauweise nach in Form von Rahmentüren oder Preßtüren hergestellt.

Wesentlicher Teil der Rahmentür ist das Türgerippe, bestehend aus dem unter der Fensteröffnung liegenden Türkasten und dem mit diesem verbundenen Tür- oder besser Fensterrahmen, das durch das Außenblech und nach Einbau der Fensterscheibe, der Führungen für diese und des Fensterhebers durch die Innenverkleidung zu der Fertigtür geschlossen wird. Der Türkasten derartiger Rahmentüren besteht aus seitlichen Endteilen, die der Einfachheit halber bei einer vorderen Kraftfahrzeugtür als A-Säule oder Scharnierblech (an der Schamierseite) und als B-Säule oder Schloßblech (an der Schloßseite) bezeichnet werden, weil sie den A-und B-Säulen der Rohkarosserie benachbart sind. Die A- und B-Säulen sind unterhalb der Fensteröffnung durch einen eine Fensterschachtverstärkung bildenden Träger, vorzugsweise einem aus einem Profil bestehenden Hohlträger, und bodenseitig durch ein Formteil oder ein Profil verbunden.

Sollen Fahrzeugtüren in sehr großen Stückzahlen hergestellt werden, sind Preßtüren wirtschaftlich, deren Gerippe aus gepreßten einstückigen Halbschalen bestehen.

Rahmentüren der vorbezeichneten Art sind beispielsweise aus den DE 40 27 449 A1 und DE 43 31 616 A1 bekannt. Bei diesen besteht der Fensterrahmen aus Strangpreßprofilen oder aus durch Rollformen hergestellten Profilen, die mit den aus Formteilen bestehenden A- und B-Säulen des Türkastens verbunden sind. Bei derartigen Rahmentüren ist das den Fensterrahmen bildende Profil den größten Belastungen und Biegebeanspruchungen in dem Bereich der Einmündung der Profilschenkel in den Türkasten bzw. dem Verbindungsbereich der Enden des Profils mit den A- und B-Säulen ausgesetzt. Aus diesem Grunde ist es erforderlich, das den Fensterrahmen bildende Profil in seinem Querschnitt auf den Bereich der größten Belastung auszulegen, so daß das Profil wegen seines konstanten Querschnitts im oberen, dachnahen Bereich überdimensioniert ist.

Aus der DE 40 08 111 A1 ist eine Fahrzeugtüre bekannt, die ein etwa senkrechtes vorderes Rahmenteil-und ein etwa senkrechtes hinteres Rahmenteil umfaßt. Die Rahmenteile nehmen je eine Führungsschiene für eine Scheibe auf. Sie sind oben über einen Fensterrahmen und unten durch mindestens ein waagrechtes Rahmenteil miteinander verbunden. Das vordere Rahmenteil und das hintere Rahmenteil können als Leichtmetall-Gußteil hergestellt sein. Der Fensterrahmen kann durch ein beschnittenes und gebogenes Leichtmetall-Strangpreßprofil gebildet sein.

Die EP 0 437 188 A1 offenbart einen Fensterrahmen für ein Kraftfahrzeug, der aus einem ersten geformten Element und einem zweiten geformten Element besteht, die miteinander in Längsrichtung verschweißt sind. Das erste geformte Element nimmt eine Dichtung für ein Fenster auf.

Aus der US-A 5 417 470 ist eine Rohbautür für ein Kraftfahrzeug bekannt, bei der die Verbindung zwischen der B-Säule des Türkastens und der Fensterschachtverstärkung durch ein C-Profil verstärkt ist.

Aufgabe der Erfindung ist es daher, eine Rohbautür der eingangs angegebenen Art zu schaffen, die sich kostengünstig in einer auf die auftretenden Beanspruchungen abgestimmten Weise herstellen läßt.

Erfindungsgemäß wird diese Aufgabe dadurch gelöst, daß angrenzend an den oberen (dachnahen) Bereich des Profils mit diesem beidseits die Querschnitte des Fensterrahmens verbreiternde Formteile verbunden sind, die ihrerseits mit den A-und B-Säulen des Türkastens verbunden sind.

Bei der erfindungsgemäßen Rohbautür besteht der obere Bereich des den Fensterrahmen bildenden Profils aus einem Profil der Stärke und des Querschnitts, der auf die geringere Belastung dieses Bereichs abgestimmt ist, so daß der Querschnitt des Profils entsprechend der tatsächlichen Belastung optimiert ist und wegen des geringeren Querschnitts eine Material-, Gewichts- und damit auch Kostenerspamis erzielt wird.

Nach der vorliegenden Erfindung werden die Schenkel bzw. Endbereiche des den Fensterrahmen bildenden Profils durch die Formteile mit dem Türkasten bzw. den A- und B-Säulen des Türkastens verbunden. Die Formteile lassen sich günstig als Preßteile oder aber auch als Gußteile herstellen, beispielsweise als Gußteile im sog. Thixoforming-Verfahren (aus Aluminium, Aluminiumlegierungen oder einer Aluminium-Magnesium-Legierung).

Bei der erfindungsgemäßen Rohbautür ist der Querschnitt des Fensterrahmens nicht nur über dessen Länge entsprechend den zu erwartenden Belastungen optimiert, die Qualität der Rohbautür ist insgesamt auch erhöht und entspricht somit gesteigerten Ansprüchen.

Zweckmäßigerweise ist das Profil beidseits seines mittleren, den oberen Bereich bildenden Abschnitts beschnitten und mit den beschnittenen Bereichen sind die Formteile verbunden. Durch diesen Beschnitt, der sich in einfacher und präziser Form beispielsweise durch Laser-Schneiden ausführen läßt, kann das Profil in optimaler Weise der Form der mit diesem zu verbindenden Formteile angepaßt werden.

Zweckmäßigerweise wird das Profil derart beschnitten, daß der Türkastenbereich durch angesetzte Formteile verbreitert werden kann.

Selbstverständlich kann das Profil auch in seinem dachnahen Bereich beschnitten sein, um es der Art der anzubringenden Dichtungen und Dichtungsprofile anzupassen.

Nach einer bevorzugten Ausführungsform ist vorgesehen, daß das Profil aus einem Hohlprofil mit zwei angeformten, frei auslaufenden Stegen oder Schenkeln besteht, an denen die Beschnitte ausgeführt sind. Dieses Profil erhält seine Grundsteiffigkeit durch den hohlen Profilquerschnitt, wobei eine zusätzliche Steifigkeit durch die Stege oder Schenkel erzielt wird, die zusätzlich gekrümmt und abgewinkelt sein können und die sich in einfacher Weise in der gewünschten Form beschneiden lassen.

Die angeschnittenen Stirnseiten der seitlichen Profilbereiche können stumpf auf die Kanten der Formteile stoßen und im Stoßbereich mit diesen verschweißt sein. Nach einer bevorzugten Ausführungsform ist jedoch vorgesehen, daß gerade Profilabschnitte mit Ausnehmungen oder Ausfräsungen versehen sind, die die entsprechenden geraden Abschnitte der Formteile aufnehmen. Die mit den Ausnehmungen oder Ausfräsungen versehenen Profilabschnitte können im Querschnitt verdickt ausgeführt sein. Durch das überlappende Verbinden der Formteile mit den Ausnehmungen oder Ausfräsungen der Profile lassen sich besonders günstige und feste Verbindungen erzielen.

Die Verbindungen können aus Schraub- oder Nietverbindungen bestehen, wobei jedoch Schweißverbindungen bevorzugt werden. Besonders gute Verbindungen lassen sich durch Laserschweißungen erzielen.

Die Formteile lassen sich in einfacher Weise den besonderen Anforderungen anpassen. Nach einer bevorzugten Ausführungsform ist vorgesehen, daß das B-Säulenformteil die obere Eckausbildung des Fensterrahmens einschließt.

Nach einer anderen bevorzugten Ausführungsform ist vorgesehen, daß das A-Säulenformteil das Spiegeldreieck (Spiegelanschlußstück) einschließt.

Um ein gutes äußeres Erscheinungsbild zu erzielen, können die Verbindungsbereiche zwischen den Profilen und Formstücken durch Dichtungen bzw. Dichtungsprofile abgedeckt sein, so daß Schweißnähte oder andere Verbindungen nicht in Erscheinung treten.

Vorstehend ist die erfindungsgemäße Rohbautür anhand vorderer Kraftfahrzeugtüren beschrieben worden. Selbstverständlich können in entsprechender Weise sämtliche Fahrzeugtüren ausgebildet sein, sofem diese mit Fensterausschnitten versehen sind.

Ausführungsbeispiele der Erfindung werden nachstehend anhand der Zeichnung näher erläutert. In dieser zeigt
- Fig. 1: eine Seitenansicht eines Fensterrahmens, bestehend aus einem gebogenen Profil, dessen Schenkel mit Formteilen verschweißt sind,
- Fig. 2: den Fensterrahmen nach Fig. 1 im auseinandergezogenen Zustand seiner Einzelteile,
- Fig. 3: einen Querschnitt durch das unbeschnittene Profil des Türrahmens nach den Fig. 1 und 2,
- Fig. 4 bis Fig. 9: Querschnitte durch den Fensterrahmen nach Fig. 1,
- Fig. 10: schematische Darstellungen eines Fensterrahmens und eines Türkastens vor ihrer Verbindung miteinander,
- Fig. 11: eine Seitenansicht einer zweiten Ausführungsform einer Rohbautür in schematischer Seitenansicht und
- Fig. 12: eine der Fig. 11 entsprechende Darstellung mit einer alternativen Art der Verbindung des Fensterrahmens mit dem Türkasten.

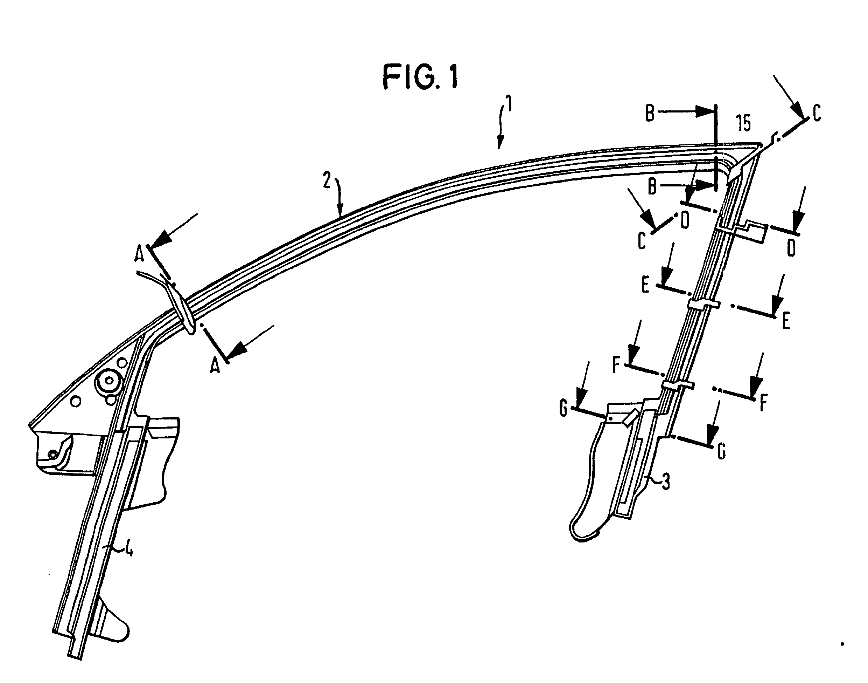

Aus Fig. 1 ist eine Seitenansicht eines Fensterrahmens 1 ersichtlich, der aus einem gebogenen Strangpreßprofil 2 aus Aluminium oder einer Aluminiumlegierung besteht, dessen Schenkel mit Formteilen 3, 4 verbunden sind, die ihrerseits mit dem nicht dargestellten Türkasten bzw. den A- und B-Säulen des Türkastens verschraubt oder verschweißt sind.

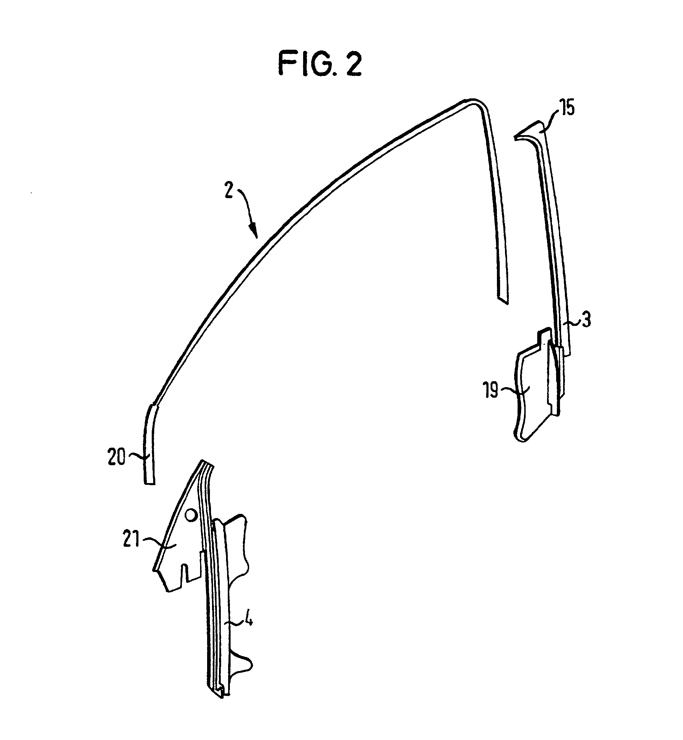

Aus Fig. 2 sind das gebogene Profil 2 und die Formteile 3, 4 im auseinandergezogenen Zustand vor ihrer Verschweißung miteinander ersichtlich.

Das Profil 2 ist vor seinem Verschweißen mit den Formteilen 3, 4 beschnitten worden, um belastungsoptimierte Querschnitte zu schaffen.

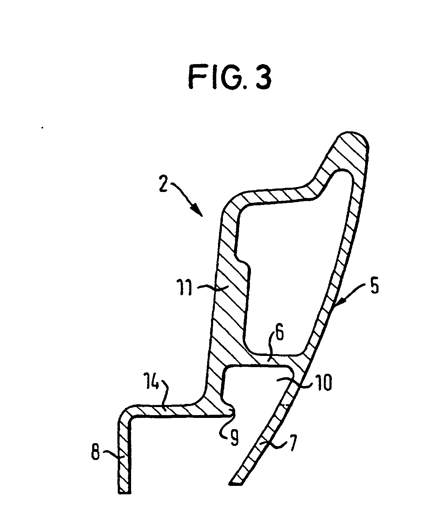

Ein Querschnitt durch das unbeschnittene Profil ist aus Fig. 3 ersichtlich. Es besteht aus einem ein Hohlprofil bildenden Profilteil 5, an dessen durch einen Quersteg 6 geschlossenen Seite zwei frei auslaufende Schenkel 7, 8 angeschlossen sind, von denen der Schenkel 8 zweifach gebogen oder abgewinkelt ist. Zwischen den Schenkeln ist eine Nut 10 gebildet, deren eine Flanke an ihrem äußeren Bereich einen Vorsprung 9 aufweist, der der Halterung eines Dichtungsprofils in der Nut 10 dient.

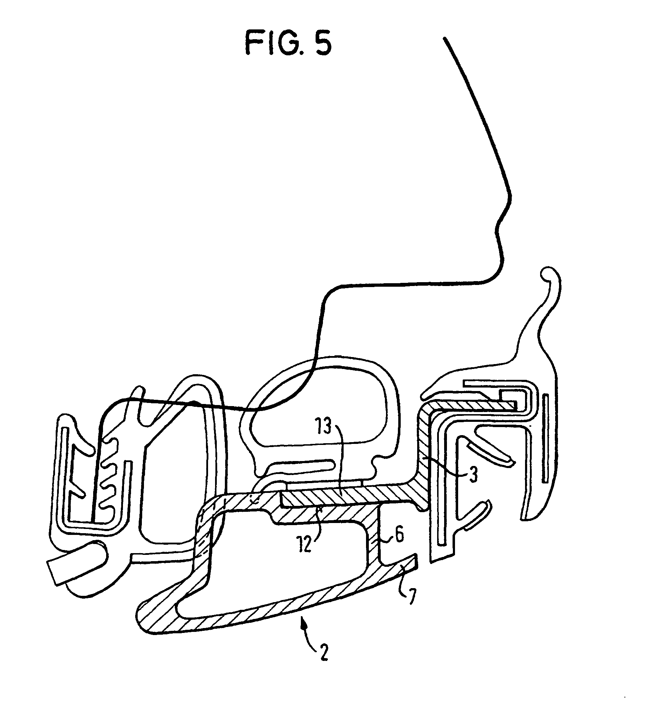

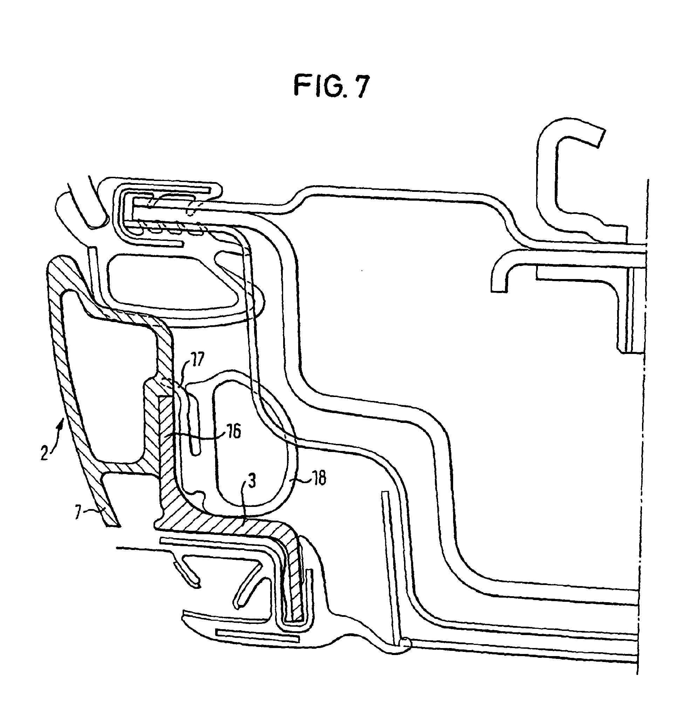

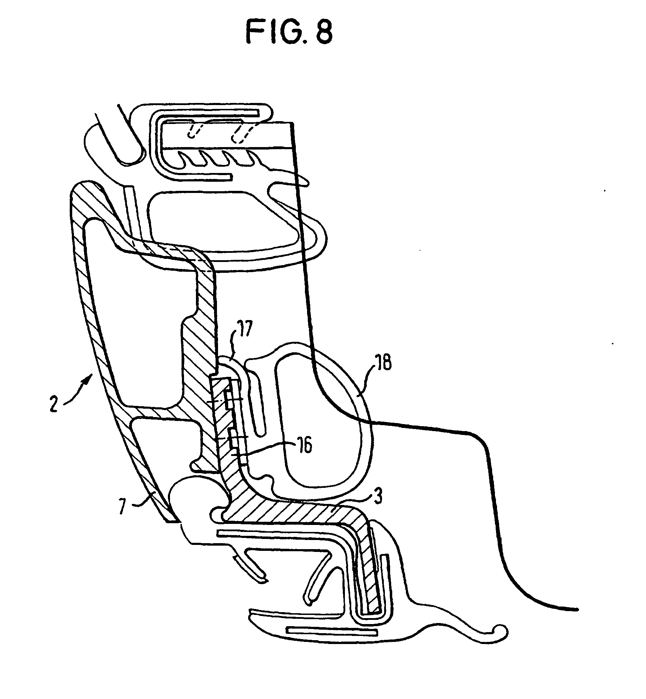

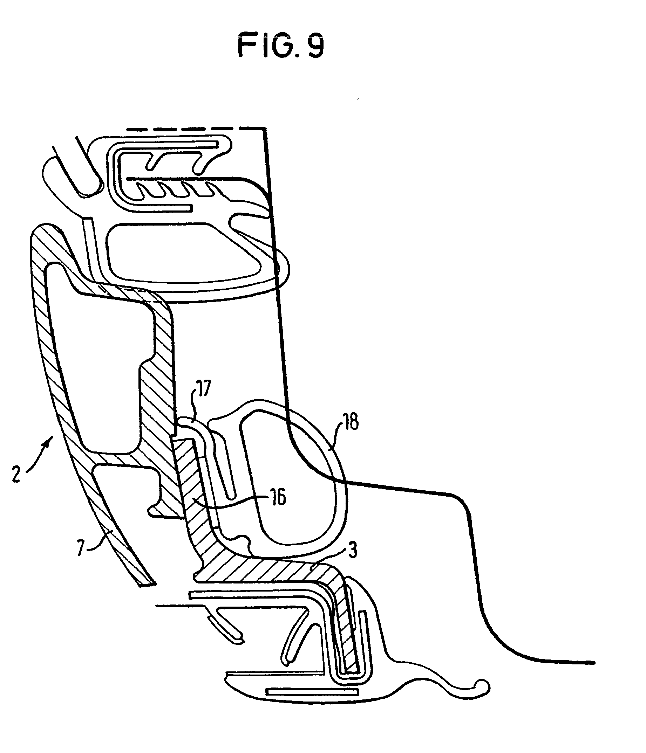

Das Profil 2 ist vor seinem Verschweißen mit den Formteilen 3, 4 in der aus den Fig. 5 bis 9 ersichtlichen Weise beschnitten worden, um belastungsoptimierte Querschnitte des Fensterrahmens 1 zu schaffen.

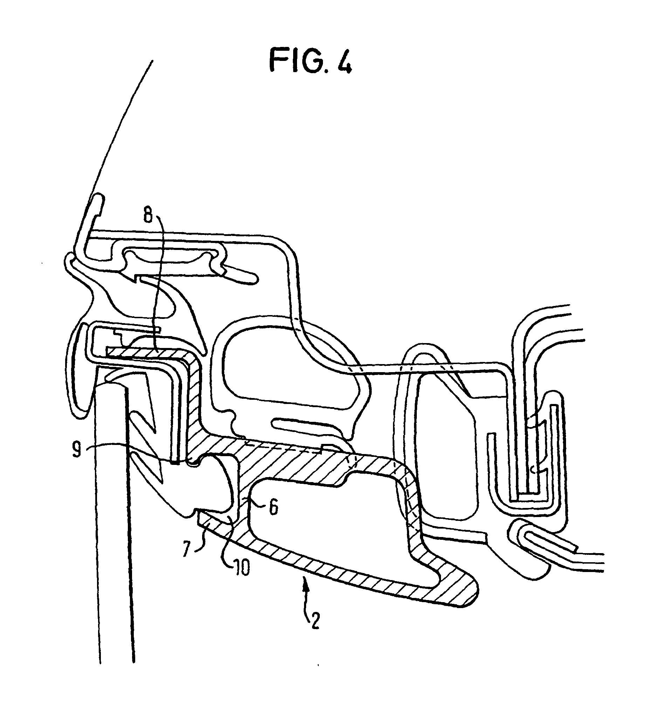

Wie aus Fig. 4 (Schnitt A-A - in Fig. 1) ersichtlich ist, ist das Profil 2 auch in dem oberen Bereich des Fensterrahmens beschnitten worden, um eine Befestigung eines Dichtungsprofils in der Nut 10 zu ermöglichen. Zu diesem Zweck ist der äußere Bereich des Schenkels 7 in der dargestellten Weise weggeschnitten worden, so daß dessen Länge im wesentlichen dem gegenüberliegenden, die Nut 10 begrenzenden Steg entspricht.

Da die Figuren 4 bis 9 neben dem Profil 2 und dem Formteil 3 auch weitere hier nicht interessierende Querschnitte zeigen, sind die Querschnitte des Profils und des Formteils 3 durch Strichelung hervorgehoben worden.

Aus Fig. 5 ist der Schnitt B-B in Fig. 1 ersichtlich, der den Anschlußbereich des Formteils 3 an das beschnittene Profil 2 zeigt. Dabei ist der Beschnitt in der Weise ausgeführt worden, daß der doppelt abgewinkelte Profilschenkel 8 entfernt und in den verdickten Bereich 11 des Profils 2 eine frei auslaufende Stufe 12 eingefräst ist, in der ein Schenkel 13 des Formteils 3 liegt, der mit dem Profil 2 durch Laserschweißen verbunden ist.

Da in dem Eckbereich der etwa quer zu dem Schenkel 7 verlaufende Stegteil 14 des Schenkels 8 des Profils 2 entfernt ist, läßt sich das Profil in der aus den Fig. 1 und 2 ersichtlichen Weise mit engem Biegeradius biegen. Der obere Eckbereich des Fensterrahmens ist in diesem Biegebereich durch die besondere Eckausbildung 15 des Formteils 3 gebildet.

Wie aus den Querschnitten 6 bis 9 folgt, verlängert sich der Profilschenkel 7 und auch der Schenkel 16 des Formteils 3 zunehmend in Richtung auf den nicht dargestellten Türkasten hin, so daß die Querschnitte der seitlichen Schenkel der Türrahmen in Richtung auf den Türkasten hin zunehmen.

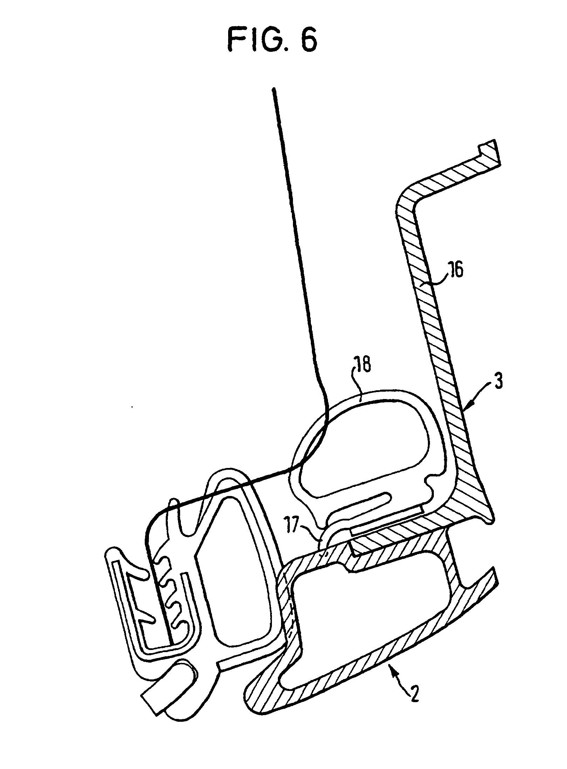

In dem dargestellten Ausführungsbeispiel wird die Verbindung zwischen dem Formteil 3 und dem Profil 2 durch Laserschweißen hergestellt. Der Schweißnahtbereich ist, wie aus den Fig. 6 bis 9 ersichtlich ist, durch eine Lippe 17 des Dichtungsprofils 18 überdeckt.

Das Formteil 3 weist an seinem unteren Endbereich ein verbreitertes Anschlußteil 19 zur Verbindung mit der B-Säule des Türkastens auf. Die Verbindung kann durch Schweißen oder Schrauben hergestellt werden.

Entsprechend der B-Säule ist auch die A-Säule des Türkastens unter Zwischenschaltung des Formteils 4 mit dem beschnittenen Schenkel 20 des Profils 2 verbunden. Das Formteil 4 ist mit dem angeformten Spiegeldreieck 21 versehen. Der Beschnitt des Schenkels 20, die Verbindung des beschnittenen Schenkels 20 mit dem Formteil 4 und die Verbindung des Formteils 4 mit dem Türkasten bzw. der A-Säule entspricht der beschriebenen Art der Verbindung und Befestigung auf der B-Säulenseite.

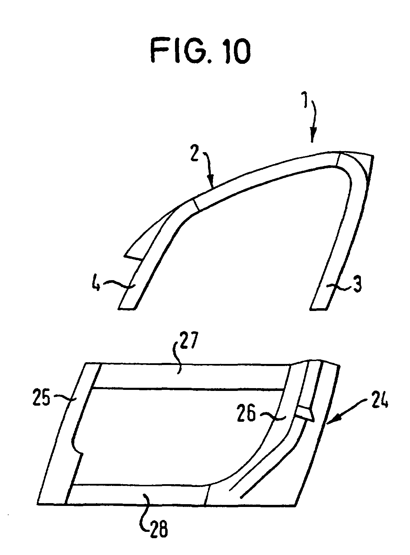

Aus Fig. 10 ist schematisch eine Art der Befestigung eines Fensterrahmens 1 mit dem Türkasten 24 ersichtlich. Der Fensterrahmen 1 besteht seinem grundsätzlichem Aufbau nach in der beschriebenen Weise aus dem beschnittenen Profil 2 und den Formteilen 3, 4. Die frei auslaufenden Schenkel der Formteile 3, 4 werden durch Schraub- oder Schweißverbindungen mit der aus Formteilen bestehenden A-Säule 25 und B-Säule 26 des Türkastens verbunden. Die A- und B-Säulen ihrerseits sind unterhalb der Fensteröffnung durch ein eine Fensterschachtverstärkung bildendes Profil 27 und ein unteres Profil oder Formteil 28 miteinander verbunden.

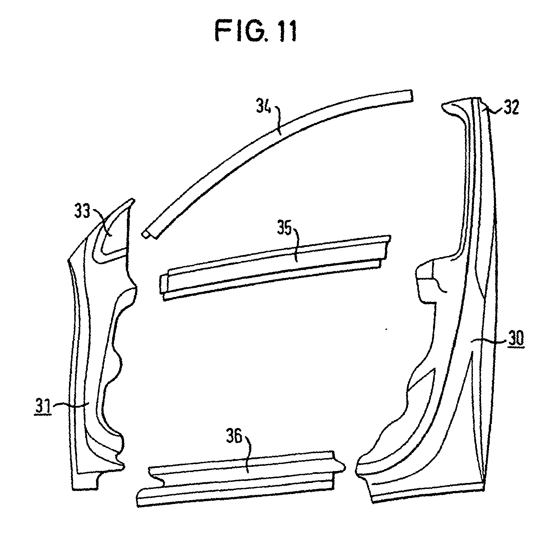

Bei einer aus Fig. 11 ersichtlichen zweiten Ausführungsform der Erfindung besteht der Türkasten aus einem die B-Säule bildenden Formteil 30 und einem die A-Säule bildenden Formteil 31. Beide Formteile sind seitlich bis über den unteren Rand der Fensteröffnung hochgezogen worden, wobei die den unteren Rand der Fensteröffnung überragenden Teile 32, 33 der A- und B-Säulen die seitlichen Bereiche des Fensterrahmens bilden. Mit dem oberen Endbereichen der hochgezogenen Seitenteile 32, 33 ist das gebogene Profil 34 beispielsweise durch eine Stumpf-Schweißung verbunden.

Die A-Säulen- und B-Säulenformteile 30, 31 sind unterhalb der Fensteröffnung durch ein eine Schachtverstärkung bildendes Profil 35 und an dem unteren Rand durch ein Profil 36 miteinander verschweißt.

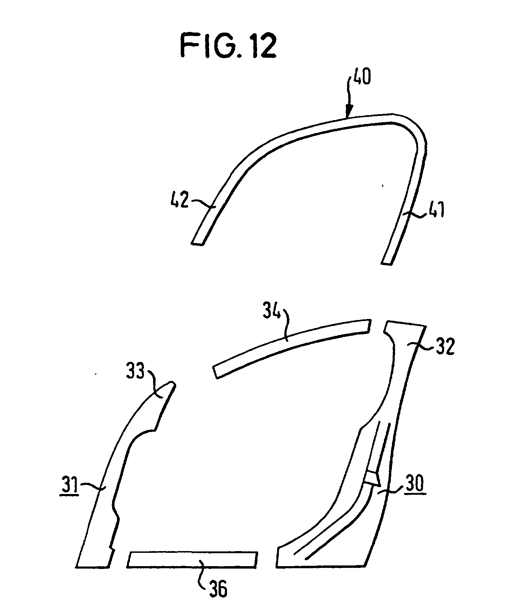

Aus Fig. 12 ist eine alternative Art der Befestigung des durch ein gebogenes Profil gebildeten Teils des Fensterrahmens mit den hochgezogenen A- und B-Säulen dargestellt. Das Profil 40 ist im wesentlichen U-förmig und, wobei dessen Schenkel 41, 42 mit den A- und B-Säulen verschweißt sind. Um eine gute und bündige Ver schweißung zu erzielen, sind die Profilschenkel 41, 42 beschnitten.

## Patentansprüche

1. Rohbautür eines Kraftfahrzeugs, dessen Türkasten mit einem aus einem Profil (2) bestehenden Fensterrahmen (1) verbunden ist, wobei
angrenzend an den oberen, dachnahen Bereich des Profils (2) mit diesem beidseits die Querschnitte des Fensterrahmens (1) in Richtung auf den Türkasten verbreiternde Formteile (3, 4) verbunden sind, **dadurch gekennzeichnet, dass** die Formteile ihrerseits mit dem Türkasten bzw. den A- und B-Säulen des Türkastens verbunden sind.

2. Rohbautür nach Anspruch 1, **dadurch gekennzeichnet, daß** das Profil (2) beidseits seines mittleren, den oberen Bereich bildenden Abschnitts beschnitten ist und daß mit den beschnittenen Bereichen die Formteile (3, 4) verbunden sind.

3. Rohbautür nach Anspruch 1 oder 2, **dadurch gekennzeichnet, daß** das Profil (2) derart beschnitten ist, daß der Türkastenbereich durch angesetzte Formteile (3, 4) verbreitert werden kann.

4. Rohbautür nach einem der Ansprüche 1 bis 3, **dadurch gekennzeichnet, daß** das Profil (2) in seinem dachnahen Bereich zur Anbringung von Dichtungen oder Dichtungsprofilen (10) beschnitten ist.

5. Rohbautür nach einem der Ansprüche 1 bis 4, **dadurch gekennzeichnet, daß** das Profil (2) aus einem Hohlprofil (5) mit zwei angeformten, frei auslaufenden Stegen oder Schenkeln (7, 8) besteht, an denen die Beschnitte ausgeführt sind.

6. Rohbautür nach einem der Ansprüche 1 bis 5, **dadurch gekennzeichnet, daß** die angeschnittenen Stirnseiten der seitlichen Profilbereiche stumpf auf Kanten der Formteile (3, 4) stoßen und, im Stoßbereich mit diesen verschweißt sind.

7. Rohbautür nach einem der Ansprüche 1 bis 6, **dadurch gekennzeichnet, daß** gerade Profilabschnitte mit Ausnehmungen oder Ausfräsungen (12) versehen sind, die die entsprechenden geraden Abschnitte der Formteile (3, 4) aufnehmen.

8. Rohbautür nach Anspruch 7, **dadurch gekennzeichnet, daß** die Verbindungen aus Schweiß-, Schraub- oder Nietverbindungen bestehen.

9. Rohbautür nach einem der Ansprüche 1 bis 8, **dadurch gekennzeichnet, daß** das B-Säulenformteil (3) die obere Eckausbildung (15) des Fensterrahmens (1) einschließt.

10. Rohbautür nach einem der Ansprüche 1 bis 9, **dadurch gekennzeichnet, daß** das A-Säulenformteil (4) das Spiegeldreieck (Spiegelanschlußstück) (21) einschließt.

11. Rohbautür nach einem der Ansprüche 1 bis 10, **dadurch gekennzeichnet, daß** die Verbindungsbereiche zwischen den Profilen (2) und den Formstücken (3, 4) durch Dichtungen bzw. Dichtungsprofile (18) abgedeckt sind.

## Claims

1. Bodyshell door of a motor vehicle, the door box of which is connected to a window frame (1) consisting of a section (2), shaped parts (3, 4) which widen the cross-sections of the window frame (1) on both sides in the direction of the door box being connected to the section (2) adjacent to the upper region of the latter near the roof, **characterized in that** the shaped parts themselves are connected respectively to the door box and the A and B pillars of the door box.

2. Bodyshell door according to Claim 1, **characterized in that** the section (2) is trimmed on both sides of its central section which forms the upper region, and **in that** the shaped parts (3, 4) are connected to the trimmed regions.

3. Bodyshell door according to Claim 1 or 2, **characterized in that** the section (2) is trimmed in such a way that the door box region can be widened by means of attached shaped parts (3, 4).

4. Bodyshell door according to one of Claims 1 to 3, **characterized in that** the section (2) is trimmed in its region near the roof in order to mount seals or sealing sections (10).

5. Bodyshell door according to one of claims 1 to 4, **characterized in that** the section (2) consists of a hollow section (5) having two integrally formed, freely tapering webs or sides (7, 8) on which the trimming is carried out.

6. Bodyshell door according to one of Claims 1 to 5, **characterized in that** the trimmed end sides of the lateral section regions butt against edges of the shaped parts (3, 4) and are welded to these in the region of abutment.

7. Bodyshell door according to one of Claims 1 to 6, **characterized in that** the straight section segments are provided with recesses or milled regions (12) which receive the corresponding straight segments of the shaped parts (3, 4).

8. Bodyshell door according to Claim 7, **characterized in that** the connections consist of weld, screw or rivet connections.

9. Bodyshell door according to one of Claims 1 to 8, **characterized in that** the B pillar shaped part (3) includes the upper corner structure (15) of the window frame (1).

10. Bodyshell door according to one of Claims 1 to 9, **characterized in that** the A pillar shaped part (4) includes the mirror triangle (mirror connecting piece) (21).

11. Bodyshell door according to one of Claims 1 to 10, **characterized in that** the connecting regions between the sections (2) and the shaped pieces (3, 4) are covered by seals or sealing sections (18).

## Revendications

1. Construction d'une porte de véhicule automobile dont le caisson de porte est relié à un cadre de fenêtre (1) constitué d'un profilé (2), dans lequel
les sections du cadre de fenêtre (1) contiguës à la zone du profilé (2) supérieure proche du toit sont raccordées des deux côtés à des pièces moulées (3, 4) les élargissant en direction du caisson de porte, **caractérisée en ce que** les pièces moulées sont raccordées de leur côté au caisson de porte, respectivement aux montants A et B du caisson de porte.

2. Construction d'une porte selon la revendication 1, **caractérisée en ce que** le profilé (2) est découpé des deux côtés de son tronçon moyen formant la zone supérieure et **en ce que** les pièces moulées (3, 4) sont raccordées aux zones découpées.

3. Construction d'une porte selon la revendication 1 ou 2, **caractérisée en ce que** le profilé (2) est découpé de telle sorte que la zone du caisson de porte peut être élargie par des pièces moulées (3, 4) appliquées.

4. Construction d'une porte selon l'une des revendications 1 à 3, **caractérisée en ce que** le profilé (2) est découpé dans sa zone proche du toit pour la mise en place de joints ou de profilés d'étanchéité (10).

5. Construction d'une porte selon l'une des revendications 1 à 4, **caractérisée en ce que** le profilé (2) consiste en un profilé creux (5) avec deux nervures ou branches (7,8) venues de moulage avec une extrémité libre, sur lesquelles les découpages sont exécutés.

6. Construction d'une porte selon l'une des revendications 1 à 5, **caractérisée en ce que** les faces frontales découpées des zones latérales du profilé butent bout à bout sur des arêtes des pièces moulées (3, 4) et sont soudées à ces dernières dans la zone de la jointure.

7. Construction d'une porte selon l'une des revendications 1 à 6, **caractérisée en ce que** les tronçons droits du profilé sont dotés d'évidements ou de fraisages (12) qui reçoivent les tronçons droits correspondants des pièces moulées (3, 4).

8. Construction d'une porte selon la revendication 7, **caractérisée en ce que** les raccordements consistent en des raccordements soudés, vissés ou rivetés.

9. Construction d'une porte selon l'une des revendications 1 à 8, **caractérisée en ce que** la pièce moulée du montant B (3) englobe la formation du coin supérieur (15) du cadre de fenêtre (1).

10. Construction d'une porte selon l'une des revendications 1 à 9, **caractérisée en ce que** la pièce moulée du montant A (4) englobe le triangle du rétroviseur (pièce de raccordement pour le rétroviseur) (21).

11. Construction d'une porte selon l'une des revendications 1 à 10, **caractérisée en ce que** les zones de raccordement entre les profilés (2) et les pièces moulées (3, 4) sont recouvertes par des joints, respectivement par des profilés d'étanchéité (18).
